# FASCICULE DE BREVET EUROPEEN

(11) **EP 1 785 289 B1**
(45) Date de publication et mention de la délivrance du brevet: **23.04.2008**
(21) Numéro de dépôt: 06301124.1
(22) Date de dépôt: 06.11.2006
(51) Int. Cl.: B60G 9/00, B60G 21/05, B60B 35/02

(54) **Train arrière de véhicule automobile**
Hinterradaufhängung eines Kraftfahrzeugs
Rear suspension of a motor vehicle

(30) Priorité: 10.11.2005 FR 0511486
(43) Date de publication de la demande: 16.05.2007
(73) Titulaire: PEUGEOT CITROËN AUTOMOBILES S.A., 78140 Vélizy Villacoublay (FR)
(72) Inventeur: Saulnier, Fabien, 94270 Le Kremlin Bicetre (FR); Roy, Jean-Marie, 95170 Deuil-la-Barre (FR)

(56) Documents cités:
- EP-A- 1 052 122
- US-A- 2 367 817
- US-A- 4 765 650
- PATENT ABSTRACTS OF JAPAN vol. 008, no. 253 (M-339), 20 novembre 1984 (1984-11-20) -& JP 59 128002 A (TOYOTA JIDOSHA KK), 24 juillet 1984 (1984-07-24)
- PATENT ABSTRACTS OF JAPAN vol. 2003, no. 12, 5 décembre 2003 (2003-12-05) -& JP 2004 314650 A (TOYOTA MOTOR CORP), 11 novembre 2004 (2004-11-11)
- PATENT ABSTRACTS OF JAPAN vol. 1995, no. 01, 28 février 1995 (1995-02-28) & JP 06 286444 A (NISSAN SHATAI CO LTD), 11 octobre 1994 (1994-10-11)
- PATENT ABSTRACTS OF JAPAN vol. 018, no. 669 (M-1725), 16 décembre 1994 (1994-12-16) -& JP 06 262922 A (NISSAN MOTOR CO LTD), 20 septembre 1994 (1994-09-20)
- PATENT ABSTRACTS OF JAPAN vol. 1998, no. 03, 27 février 1998 (1998-02-27) -& JP 09 290611 A (SUZUKI MOTOR CORP), 11 novembre 1997 (1997-11-11)
- PATENT ABSTRACTS OF JAPAN vol. 1997, no. 02, 28 février 1997 (1997-02-28) -& JP 08 253010 A (NISSAN MOTOR CO LTD), 1 octobre 1996 (1996-10-01)
- PATENT ABSTRACTS OF JAPAN vol. 018, no. 669 (M-1725), 16 décembre 1994 (1994-12-16) -& JP 06 262920 A (NISSAN MOTOR CO LTD), 20 septembre 1994 (1994-09-20)
- PATENT ABSTRACTS OF JAPAN vol. 1999, no. 01, 29 janvier 1999 (1999-01-29) -& JP 10 287115 A (NISSAN MOTOR CO LTD), 27 octobre 1998 (1998-10-27)
- PATENT ABSTRACTS OF JAPAN vol. 2003, no. 12, 5 décembre 2003 (2003-12-05) & JP 2005 271676 A (DAIHATSU MOTOR CO LTD), 6 octobre 2005 (2005-10-06)

## Description

L'invention concerne un train arrière de véhicule automobile.

Plus précisément, l'invention concerne un train arrière de véhicule automobile, du type comprenant :
- un essieu arrière disposé sous le châssis du véhicule ;
- une barre stabilisatrice transversale présentant une extrémité supérieure liée au châssis, et
- un pivot d'articulation interposé entre une extrémité inférieure de la barre et l'essieu.

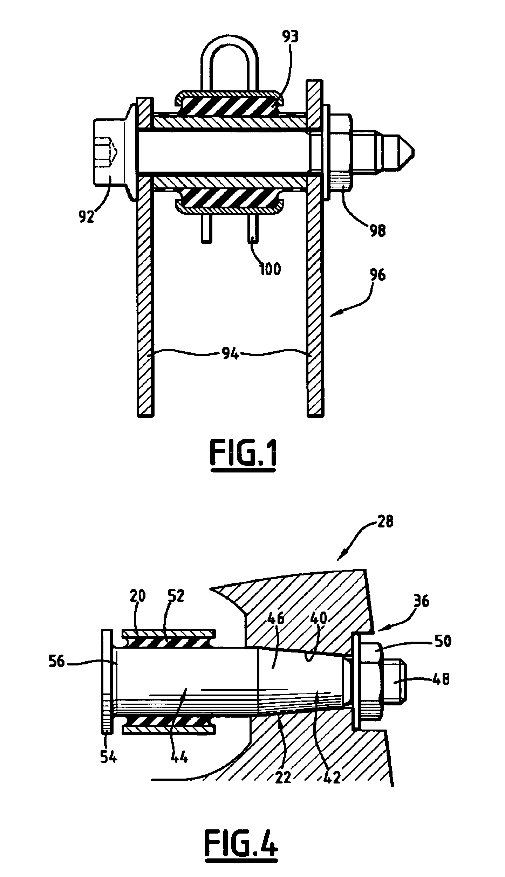

Dans les véhicules de l'état de la technique, l'extrémité inférieure de la barre stabilisatrice, appelée également barre Panhard, est articulée dans une chape rapportée sur l'essieu. Comme le montre la figure 1, le pivot d'articulation 92 présente la forme d'une vis traversant les deux bras opposés 94 de la chape 96 solidaire de l'essieu arrière du véhicule. Le pivot 92 est fixé à la chape 96 par un écrou 98. L'extrémité inférieure 100 de la barre stabilisatrice est disposée autour du pivot 92, avec l'interposition d'un manchon élastique 93, entre les deux bras 94 de la chape 96.

La barre stabilisatrice contribue à maintenir l'essieu sous le châssis dans les virages. Elle reprend des efforts très importants, de l'ordre d'une tonne pour un véhicule utilitaire léger. La chape est donc dimensionnée pour tenir de tels efforts. Elle est généralement volumineuse et lourde, ce qui est un problème pour les véhicules actuels, dont l'espace sous châssis doit abriter un nombre croissant d'équipements.

De plus, la fixation de la barre stabilisatrice par l'intermédiaire d'un manchon élastique et d'une vis, le tout pris en chape, est une opération difficile sur ligne de montage car elle nécessite le centrage de la barre stabilisatrice entre les deux bras de la chape.

Pour résoudre ce problème, il est connu du document JP 59 128 002 A d'utiliser un train arrière conforme au préambule de la revendication 1.

Dans ce contexte, l'invention vise à proposer un train arrière de véhicule qui présente un agencement optimisé de la barre stabilisatrice vis-à-vis de l'essieu arrière.

Une fixation robuste d'une barre stabilisatrice sur un essieu arrière est déjà connue du document US 2 367 817.

A cette fin, l'invention porte sur un train arrière de véhicule automobile conforme à la revendication 1.

Le train arrière du véhicule peut également présenter une ou plusieurs des caractéristiques ci-dessous, considérées individuellement ou selon toutes les combinaisons techniquement possibles :
- la tête d'essieu est une pièce forgée massive ;
- le pivot d'articulation comprend une extrémité filetée prolongeant le tronçon tronconique à l'opposé de l'extrémité inférieure de la barre stabilisatrice, apte à recevoir un écrou de fixation du pivot d'articulation sur la branche transversale ;
- l'extrémité inférieure de la barre stabilisatrice est bloquée en translation par rapport au pivot d'articulation du second côté par une rondelle sertie sur le pivot d'articulation ;
- la barre stabilisatrice comprend un manchon élastique interposé entre son extrémité inférieure et le pivot d'articulation ;
- le pivot d'articulation s'étend suivant une direction longitudinale du véhicule ; et
- le pivot d'articulation est fixé sur l'essieu d'un côté avant de l'extrémité inférieure de la barre stabilisatrice par rapport au véhicule.

D'autres caractéristiques et avantages de l'invention ressortiront de la description qui en est donnée ci-dessous, à titre d'exemple non limitatif, en référence aux figures annexées, parmi lesquelles :
- la figure 1 est une vue en coupe axiale des moyens d'articulation de l'extrémité inférieure de la barre stabilisatrice sur l'essieu arrière d'un train arrière de l'état de la technique ;
- la figure 2 est une vue en perspective de la moitié gauche d'un train arrière conforme à l'invention, et d'une partie inférieure de sa barre stabilisatrice ;
- la figure 3 est une vue agrandie, en perspective, d'une partie de la figure 2, les moyens de liaison de la barre stabilisatrice avec l'essieu étant représentés de façon éclatée ; et
- la figure 4 est une vue en coupe axiale des moyens de liaison de la barre stabilisatrice avec l'essieu, considérés suivant l'incidence des flèches IV de la figure 2.

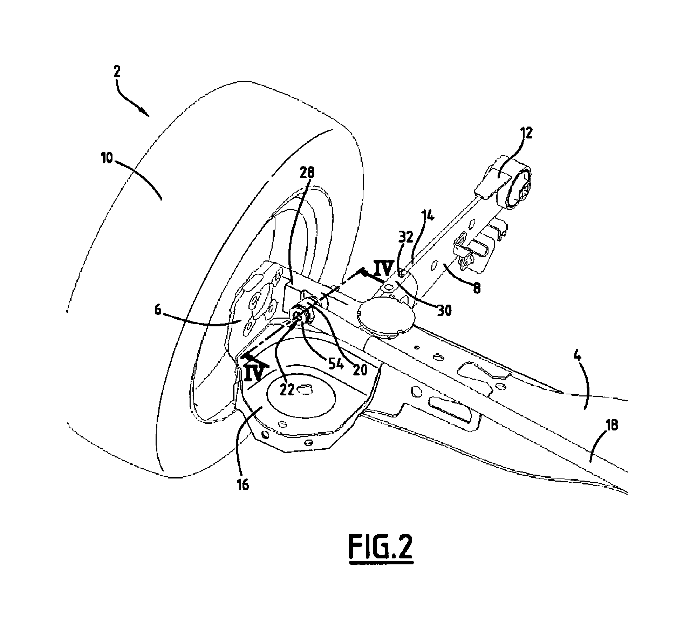

Un train arrière selon l'invention comprend un essieu arrière 2 représenté partiellement sur la figure 2 est destiné à être placé sous le châssis (non représenté) d'un véhicule automobile.

L'essieu arrière 2 comprend une traverse 4 s'étendant transversalement sensiblement sur toute la largeur du véhicule. Il comprend également, à chaque extrémité de la traverse 4, une tête d'essieu 6 rigidement fixée sur la traverse 4, un bras tiré longitudinal 8 lié à la tête d'essieu 6, des moyens de suspension (non représentés), une roue 10, et une fusée de roue (non représentée), rigidement fixée sur la tête d'essieu 6, la roue 10 étant montée rotative autour de la fusée de roue.

Le bras tiré 8 présente une extrémité avant 12 articulée sur le châssis. Il est lié par son extrémité arrière 14 à la tête d'essieu 6.

Les moyens de suspension comprennent typiquement un amortisseur et un ressort hélicoïdal de suspension (non représentés), interposés entre la traverse 4 et le châssis. Dans ce but, l'essieu 2 comprend une coupelle 16 rigidement fixée sur la traverse 4, sur laquelle le ressort de suspension prend appui par une extrémité inférieure. L'amortisseur est typiquement disposé selon l'axe central du ressort hélicoïdal.

Le train arrière selon l'invention comprend également une barre stabilisatrice 18 présentant une extrémité supérieure (non représentée) liée au châssis, et une extrémité inférieure 20 liée à l'essieu 2 par une liaison pivot autour d'un pivot d'articulation 22. Comme on le voit sur la figure 2, la barre stabilisatrice 18 s'étend à partir de son extrémité 20 transversalement suivant une direction légèrement inclinée vers le haut, jusqu'au châssis.

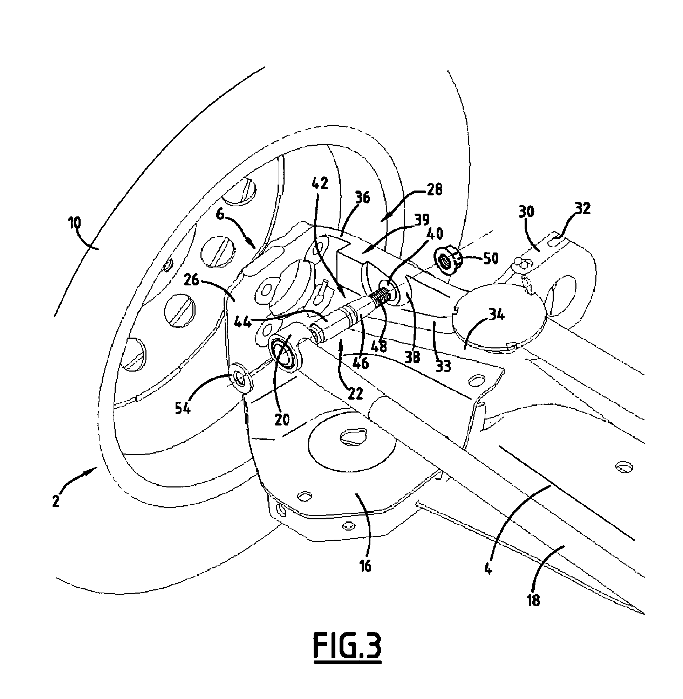

Comme le montre plus précisément la figure 3, la tête d'essieu 6 est une pièce massive, forgée, présentant une forme générale en S. Elle comprend une plaque 26 verticale longitudinale de support de la fusée de roue, une branche 28 transversale s'étendant vers l'intérieur du véhicule à partir d'un bord avant de la plaque 26, et une plaque longitudinale 30 de fixation du bras 8, s'étendant vers l'avant à partir d'une extrémité intérieure de la branche 28 opposée à la plaque 26.

Une rainure 32 verticale est ménagée dans la tranche de la plaque 30 tournée vers l'avant. L'extrémité arrière 14 du bras 8 est encastrée et soudée dans la rainure 32.

La branche transversale 28 présente un bord inférieur évasé 33, formant ainsi un balcon en saillie. Le balcon 33 repose sur une face supérieure 34 de la traverse 4, et est rigidement fixé à cette traverse par des cordons de soudure.

La branche 28 comprend une âme 36 présentant la forme d'une plaque verticale transversale, et une surépaisseur locale de matière 38 portée par une partie transversalement centrale de l'âme 36. Les plaques 26 et 30 sont solidaires des deux extrémités transversales opposées de l'âme 36. La surépaisseur 38 est formée sur une face de l'âme 36 tournée vers l'arrière du véhicule. L'extrémité inférieure 20 de la barre stabilisatrice est articulée dans la partie centrale épaissie 39 de la branche 28.

A cet effet, la partie centrale épaissie 39 est traversée longitudinalement par une lumière 40 de forme tronconique. La lumière 40 converge d'arrière en avant.

Comme on le voit sur les figures 3 et 4, le pivot 22 comprend une tige longitudinale, la tige étant divisée en une partie avant 42 et une partie arrière 44 solidaire de la partie avant. La partie avant 42 comprend un tronçon tronconique 46, de forme conjuguée à celle de la lumière 40 et une extrémité filetée 48. Le tronçon tronconique 46 converge vers l'avant du véhicule, l'extrémité filetée 48 prolongeant le tronçon 46 vers l'avant. La partie arrière 44 est sensiblement cylindrique.

On voit sur la figure 4 que le tronçon tronconique 46 est engagé dans la lumière 40, l'extrémité filetée 48 faisant saillie d'un côté avant de la branche 28, et la partie arrière 44 faisant saillie d'un côté arrière de la branche 28. Le pivot 22 est rigidement fixé sur la branche 28 par un écrou 50 vissé sur l'extrémité filetée 48, cet écrou sollicitant le tronçon tronconique 46 vers l'avant contre la paroi de la lumière 40.

L'extrémité inférieure 20 de la barre stabilisatrice 18 est conformée en un cylindre évidé d'axe central longitudinal. L'extrémité inférieure cylindrique 20 est montée autour de la partie arrière 44 du pivot, avec interposition d'un manchon élastique 52 entre l'extrémité 20 et le pivot 22. Le manchon 52 est adhérisé à la fois au pivot 22 et à l'extrémité 20 de la barre stabilisatrice 18. Une rondelle 54 est sertie à l'extrémité 56 de la partie arrière 44 opposée à la partie avant 42, cette extrémité 56 étant libre.

La partie arrière 44 de l'axe d'articulation, sur laquelle la barre stabilisatrice 18 est montée, est donc supportée d'un côté avant de l'extrémité inférieure 20 par la branche transversale 28, mais reste libre d'un côté arrière de l'extrémité inférieure 20. Elle s'étend en porte-à-faux, longitudinalement, par rapport à la branche 28.

La coupelle 16 est disposée dans l'angle formé par la plaque 26 et la branche 28. Elle est soudée sur la tête d'essieu et également sur la traverse 4.

La liaison entre l'extrémité inférieure 20 de la barre stabilisatrice 18 et l'essieu arrière 2 est particulièrement compacte. La barre 18 est fixée directement sur l'essieu et non plus par l'intermédiaire d'une chape. Ceci est possible du fait que le pivot d'articulation 22 autour duquel l'extrémité inférieure 20 de la barre 18 est montée, n'est fixé sur l'essieu que d'un côté de cette extrémité inférieure 20, le pivot 22 restant libre de l'autre côté de l'extrémité inférieure 20. Le pivot d'articulation 22 est ainsi monté en porte-à-faux sur l'essieu.

Il est particulièrement avantageux de monter la barre stabilisatrice 18 sur la tête d'essieu 6, puisque cette pièce est une pièce forgée massive, particulièrement résistante.

De plus, le montage de la barre stabilisatrice 18 sur l'essieu arrière 2 est simplifié car il ne nécessite qu'un simple positionnement du pivot 22 dans la lumière 40 et le serrage de l'écrou 50.

La position du point d'articulation de la barre 18 sur la tête d'essieu 6, au centre de la branche transversale 28 de celle-ci, permet qu'il n'y ait pas d'interférence entre la barre stabilisatrice 18 et les moyens de suspension (ressort et amortisseur).

L'extrémité inférieure 20 de la barre stabilisatrice 18 est prise, axialement, entre la branche 28 de la tête d'essieu 6 et la rondelle sertie 54. Au cas où le manchon élastique 52 se désolidariserait du pivot d'articulation 22, l'extrémité inférieure 20 ne pourrait donc pas s'échapper de l'axe.

En variante, le pivot d'articulation 22 est fixé sur la branche 28 par d'autres moyens que ceux décrits ci-dessus (tronçon tronconique bloqué dans un logement de forme conjuguée à l'aide d'un écrou). Le pivot est par exemple vissé dans un orifice fileté, ou comporte un épaulement en appui sur un côté arrière de la branche 28, un écrou étant vissé sur son extrémité libre filetée d'un côté avant de la branche 28.

L'extrémité inférieure de la barre stabilisatrice peut être fixée, non sur la branche 28, mais plutôt en un autre point de la tête d'essieu forgée, en fonction de la forme de la tête d'essieu, sous réserve qu'il n'y ait pas d'interférence entre la barre et les moyens de suspension du véhicule.

## Revendications

1. Train arrière de véhicule automobile comprenant
- un essieu arrière (2) disposé sous le châssis du véhicule, comprenant une traverse (4), au moins une tête d'essieu (6) fixée sur la traverse (4), et au moins une fusée de roue fixée sur la tête d'essieu (6),
- une barre stabilisatrice (18) transversale présentant une extrémité supérieure liée au châssis,
- un pivot d'articulation (22) interposé entre une extrémité inférieure (20) de la barre (18) et l'essieu (2), ledit pivot d'articulation (22) étant lié à l'essieu (2) seulement d'un premier côté de l'extrémité inférieure (20) de la barre stabilisatrice (18), le second côté de l'extrémité inférieure (20), opposé au premier, étant libre vis-à-vis de l'essieu (2),
la tête d'essieu (6) comprenant une plaque longitudinale (26) supportant la fusée de roue, et une branche transversale (28) solidaire de la plaque longitudinale (26), la branche transversale (28) faisant saillie vers le haut par rapport à la traverse (4), le pivot d'articulation (22) étant fixé sur la branche transversale (28),
**caractérisé en ce que** le pivot d'articulation (22) comprend une tige présentant, du premier côté de l'extrémité inférieure (20) de la barre stabilisatrice (18), un tronçon tronconique (46) convergeant à l'opposé de ladite extrémité inférieure (20), ce tronçon tronconique (46) étant engagé dans une lumière tronconique (40) de forme conjuguée traversant la branche transversale (28).

2. Train arrière selon la revendication 1, **caractérisé en ce que** la tête d'essieu (6) est une pièce forgée massive.

3. Train arrière selon la revendication 1 ou 2, **caractérisé en ce que** le pivot d'articulation (22) comprend une extrémité filetée (48) prolongeant le tronçon tronconique (46) à l'opposé de l'extrémité inférieure (20) de la barre stabilisatrice (18), apte à recevoir un écrou (50) de fixation du pivot d'articulation (22) sur la branche transversale (28).

4. Train arrière selon l'une quelconque des revendications 1 à 3, **caractérisé en ce que** l'extrémité inférieure (20) de la barre stabilisatrice (18) est bloquée en translation par rapport au pivot d'articulation (22) du second côté par une rondelle (54) sertie sur le pivot d'articulation (22).

5. Train arrière selon l'une quelconque des revendications 1 à 4, **caractérisé en ce que** la barre stabilisatrice (18) comprend un manchon élastique (52) interposé entre son extrémité inférieure (20) et le pivot d'articulation (22).

6. Train arrière selon l'une quelconque des revendications 1 à 5, **caractérisé en ce que** le pivot d'articulation (22) s'étend suivant une direction longitudinale du véhicule.

7. Train arrière selon la revendication 6, **caractérisé en ce que** le pivot d'articulation (22) est fixé sur l'essieu (2) d'un côté avant de l'extrémité inférieure (20) de la barre stabilisatrice par rapport au véhicule.

## Claims

1. Motor vehicle rear axle assembly comprising:
- a rear axle (2) positioned under the chassis of the vehicle, comprising a cross member (4), at least one axle head (6) secured to the cross member (4) and at least one stub axle secured to the axle head (6);
- a transverse stabilizer bar (18) whose upper end is connected to the chassis; and
- a swivel pin (22) inserted between the lower end (20) of the bar (18) and the axle (2), said swivel pin (22) being connected to the axle (2) only on a first side of the lower end (20) of the stabilizer bar (18), the second side of the lower end (20), opposite the first, being free with respect to the axle (2),
the axle head (6) comprising a longitudinal plate (26) supporting the stub axle, and a transverse branch (28) fixed to the longitudinal plate (26), the transverse branch (28) projecting upwards with respect to the cross member (4), and the swivel pin (22) being secured to the transverse branch (28),
**characterized in that** the swivel pin (22) comprises a rod having, on the first side of the lower end (20) of the stabilizer bar (18), a frustoconical section (46) tapering away from said lower end (20), this frustoconical section (46) engaging in a mating frustoconical hole (40) passing through the transverse branch (28).

2. Rear axle assembly according to Claim 1, **characterized in that** the axle head (6) is a solid forging.

3. Rear axle assembly according to Claim 1 or 2, **characterized in that** swivel pin (22) has a threaded end (48) extending the frustoconical section (46) away from the lower end (20) of the stabilizer bar (18) and able to hold a screw (50) for securing the swivel pin (22) to the transverse branch (28).

4. Rear axle assembly according to any one of Claims 1 to 3, **characterized in that** the lower end (20) of the stabilizer bar (18) is prevented from undergoing translational movement independent of the swivel pin (22) on the second side by means of a washer (54) mounted on the swivel pin (22).

5. Rear axle assembly according to any one of Claims 1 to 4, **characterized in that** the stabilizer bar (18) has an elastic sleeve (52) inserted between its lower end (20) and the swivel pin (22).

6. Rear axle assembly according to any one of Claims 1 to 5, **characterized in that** the swivel pin (22) extends in the longitudinal direction of the vehicle.

7. Rear axle assembly according to Claim 6, **characterized in that** the swivel pin (22) is secured to the axle (2) on the front side of the lower end (20) of the stabilizer bar with respect to the vehicle.

## Patentansprüche

1. Hinteres Fahrwerk eines Kraftfahrzeugs, das aufweist
- eine Hinterachse (2), die unter dem Fahrgestell des Fahrzeugs angeordnet ist, mit einem Querträger (4), mit mindestens einem Achskopf (6), der am Querträger (4) befestigt ist, und mit mindestens einem Radschenkel, der am Achskopf (6) befestigt ist,
- einen Querstabilisator (18), der ein oberes Ende aufweist, das mit dem Fahrgestell verbunden ist,
- einen Gelenkzapfen (22), der zwischen ein unteres Ende (20) des Stabilisators (18) und die Achse (2) eingefügt ist, wobei der Gelenkzapfen (22) mit der Achse (2) nur auf einer ersten Seite des unteren Endes (20) des Stabilisators (18) verbunden ist (18), während die zweite Seite des unteren Endes (20), entgegengesetzt zur ersten, bezüglich der Achse (2) frei ist,
wobei der Achskopf (6) eine Längsplatte (26), die den Radschenkel trägt, und einen Querschenkel (28) aufweist, der fest mit der Längsplatte (26) verbunden ist, wobei der Querschenkel (28) bezüglich des Querträgers (4) nach oben vorsteht, wobei der Gelenkzapfen (22) am Querschenkel (28) befestigt ist,
**dadurch gekennzeichnet, dass** der Gelenkzapfen (22) eine Stange aufweist, die auf der ersten Seite des unteren Endes (20) des Stabilisators (18) einen kegelstumpfförmigen Abschnitt (46) hat, der entgegengesetzt zum unteren Ende (20) konvergiert, wobei dieser kegelstumpfförmige Abschnitt (46) in eine kegelstumpfförmige Öffnung (40) entsprechender Form eingefügt ist, die den Querschenkel (28) durchquert.

2. Hinteres Fahrwerk nach Anspruch 1, **dadurch gekennzeichnet, dass** der Achskopf (6) ein massives geschmiedetes Bauteil ist.

3. Hinteres Fahrwerk nach Anspruch 1 oder 2, **dadurch gekennzeichnet, dass** der Gelenkzapfen (22) ein Gewindeende (48), das den kegelstumpfförmigen Abschnitt (46) entgegengesetzt zum unteren Ende (20) des Stabilisators (18) verlängert, aufweist, das eine Befestigungsmutter (50) des Gelenkzapfens (22) auf dem Querschenkel (28) aufnehmen kann.

4. Hinteres Fahrwerk nach einem der Ansprüche 1 bis 3, **dadurch gekennzeichnet, dass** das untere Ende (20) des Stabilisators (18) in Translation bezüglich des Gelenkzapfens (22) auf der zweiten Seite durch eine Scheibe (54) blockiert wird, die auf den Gelenkzapfen (22) eingespannt ist.

5. Hinteres Fahrwerk nach einem der Ansprüche 1 bis 4, **dadurch gekennzeichnet, dass** der Stabilisator (18) eine elastische Muffe (52) aufweist, die zwischen sein unteres Ende (20) und den Gelenkzapfen (22) eingefügt ist.

6. Hinteres Fahrwerk nach einem der Ansprüche 1 bis 5, **dadurch gekennzeichnet, dass** der Gelenkzapfen (22) sich in einer Längsrichtung des Fahrzeugs erstreckt.

7. Hinteres Fahrwerk nach Anspruch 6, **dadurch gekennzeichnet, dass** der Gelenkzapfen (22) an der Achse (2) auf einer Vorderseite des unteren Endes (20) des Stabilisators bezüglich des Fahrzeugs befestigt ist.
